# EUROPEAN PATENT APPLICATION

(11) **EP 4 029 419 A1**
(43) Date of publication of application: **20.07.2022**
(21) Application number: 22151817.8
(22) Date of filing: 17.01.2022
(51) Int. Cl.: A47J 47/06, A47J 47/10, A47J 47/02

(54) **A CONTAINER FOR FOODSTUFFS**

(30) Priority: 19.01.2021 IT 202100000869
(71) Applicant: Wuitoki Italia S.r.l., 30016 Jesolo Venezia (IT)
(72) Inventor: VISENTIN, Marco, 30024 Musile di Piave (Venezia) (IT)
(74) Representative: Casadei, Giovanni

(57) **Abstract**

Container (1) for foodstuffs comprising a main body (2) having a bottom wall (2a) and a perimeter side wall (2c) connected to the bottom wall (2a) so as to define a containment volume for foodstuffs. The perimeter side wall (2b) being provided with an edge portion (2c) distal from the bottom wall (2a).

The container (1) comprises a lid (3) comprising a central portion (3a) and engagement tabs (3b) extending from a perimeter portion (3c) of the central portion (3a) and configured to hook or to be hooked to the edge portion (2c) of the main body (2) so as to define a configuration for engaging the lid (3) with the main body (2). The central portion (3a) can be pressed by a user so as to obtain a movement of the engagement tabs (3b) away from the edge portion (2c), defining a configuration for disengaging the lid (3) from the main body (2).

## Description

The present invention relates to a container for foodstuffs.

In particular, the present invention falls within the sector of the storage and/or transport of raw or cooked foodstuffs.

The container according to the present invention can further be used for storing products as a function of a user's requirements.

To date, different types of containers for foodstuffs are known, all characterised in that they have a main body for the containment thereof and a lid for the (hermetic) closing of the main body in order to store and/or transport foodstuffs of different kinds.

With particular reference to the lids of such containers, their purpose is that of sealing the container in order to store (or safely transport) the foodstuff contained therein.

However, with particular reference to the lids, known containers have various disadvantages.

A first disadvantage lies in the deformability of the lids which, following various openings and closings of the container, lose their shape properties, no longer being able to suitably close the container and therefore guarantee the safe storage and/or transport of the foodstuffs. Furthermore, other known containers define hermetic closures such as to make it difficult for users to open them as they find themselves wasting time in the attempt to open the lid, if not actually causing themselves pain in the process.

The technical task of the present invention is thus to provide a container for foodstuffs able to overcome the prior-art drawbacks which have emerged.

The aim of the present invention is therefore that of providing a container for foodstuffs provided with a lid that enables easy opening of the container itself.

A further aim of the present invention is therefore that of providing a container for foodstuffs provided with a lid that enables suitable closing of the container itself even after a high number of uses.

The stated technical task and specified objects are substantially achieved by a container for foodstuffs comprising the technical features disclosed in one or more of the appended claims. The dependent claims correspond to possible embodiments of the invention.

In particular, the stated technical task and specified objects are substantially achieved by a container for foodstuffs comprising a main body having a bottom wall and a perimeter side wall connected to the bottom wall so as to define a containment volume for foodstuffs. The perimeter side wall is provided with an edge portion distal from the bottom wall.

The container further comprises a lid comprising a central portion and engagement tabs extending from a perimeter portion of the central portion and configured to hook or to be hooked to the edge portion of the main body so as to define a configuration for engaging the lid with the main body.

The central portion can be pressed by a user so as to obtain a movement of the engagement tabs away from the edge portion, defining a configuration for disengaging the lid from the main body.

Preferably, the lid is made of elastic material.

Advantageously, the pressure of the central portion leads to elastic deformation which moves the perimeter portion and, therefore, the engagement tabs so as to be able to easily separate the lid from the main body.

Further characteristics and advantages of the present invention will become more apparent from the indicative and thus non-limiting description of an embodiment of a container for foodstuffs.

Such a description will be set out below with reference to the appended drawings, which are provided solely for illustrative and therefore non-limiting purposes, in which:

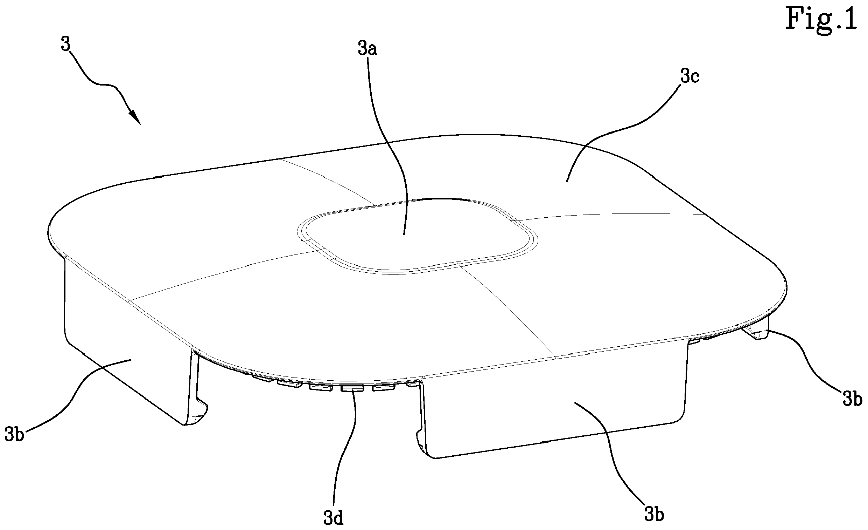

- Figure 1 is a schematic representation of a lid of the container subject-matter of the present invention;
- Figure 2 is a schematic representation of a container subject-matter of the present invention according to a first configuration;
- Figure 3 is a schematic representation of a container subject-matter of the present invention according to a second configuration.

With reference to the appended figures, 1 indicates in its entirety a container for foodstuffs which, for simplicity of description, will be referred to below as container 1.

The term foodstuffs is intended to mean cooked or raw foodstuffs such as, for example, pasta, meat, fish, vegetables, dried fruit, fruit and the like. The container 1 according to the present invention can further be used for containing different products as a function of the user's requirements.

The container 1 comprises a main body 2 having a bottom wall 2a and a perimeter side wall 2b connected to the bottom wall so as to define a containment volume for foodstuffs (or other products as a function of a user's needs).

Preferably, the main body 2 comprises a bottom wall 2a with a substantially square or rectangular conformation. Therefore, the perimeter side wall 2b is defined by four side walls.

Alternatively, the main body 2 may comprise a bottom wall 2a with a substantially disc shaped or ellipse/oval conformation.

Therefore, the perimeter side wall 2b is defined by a single wall extending from the bottom wall 2a.

Preferably, the bottom wall 2a and the perimeter side wall 2b may have different conformations.

The perimeter side wall 2b is provided with an edge portion 2c distal from the bottom wall 2a. In other words, an edge portion 2c extends in an upper portion of the perimeter side wall 2b. The edge portion 2c can extend along the entire upper perimeter of the perimeter side wall 2b or can extend only in certain portions of the upper perimeter of the perimeter side wall 2b.

Preferably, the main body 2 can be made of plastic material or another material suitable for transport in order to prevent undesired breakages thereof.

The container 1 further comprises a lid 3 for closing the main body 2. Preferably, the lid 3 is made of elastic material. Elastic material means any material able to be elastically deformed starting from an initial configuration, due to the effect of mechanical strain, and to return elastically to the initial configuration if the mechanical strain ends. Preferably, the lid 3 has the same conformation as the bottom wall 2a. Even more preferably, the lid 3 has the same conformation as the upper portion of the perimeter side wall 2b.

The lid 3 comprises a central portion 3a and engagement tabs 3b extending from a perimeter portion 3c of the central portion 3a. Preferably, the lid 3 comprises two engagement tabs 3b.

Preferably, for example as represented in the embodiment of the appended figures, the lid 3 comprises four engagement tabs 3b.

As a function of the shape of the main body 2, the lid 3 can have a different number of engagement tabs 3b.

The lid 3 is elastically deformable between a configuration of hooking to the main body 2 and a configuration of disengagement from the main body 2.

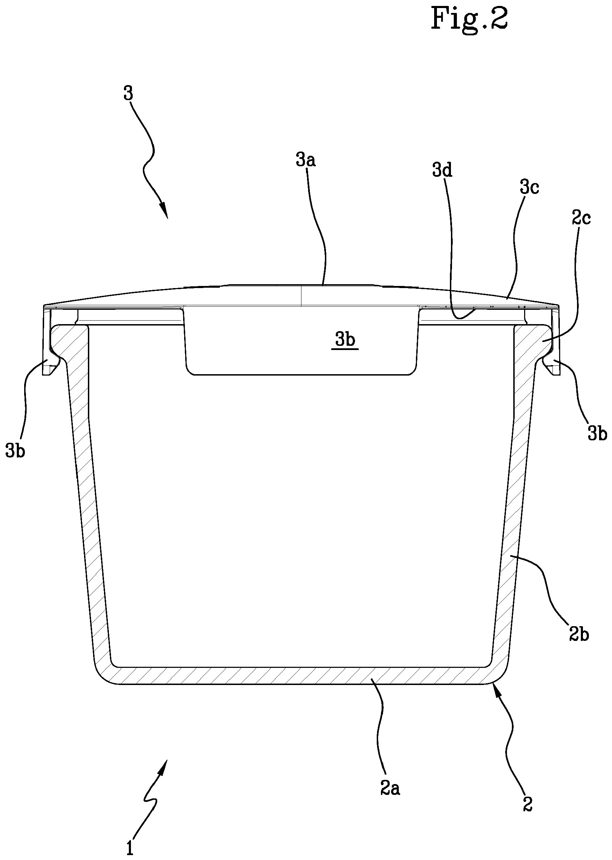

In particular, the engagement tabs 3b are configured to be hooked or unhooked to/from the edge portion 2c of the main body 2 so as to define the engagement configuration of the lid 3 with the main body 2, as represented for example in figure 2.

As represented in the appended figures, the engagement tabs 3b have an inner portion, facing towards the main body 2 in the engagement configuration, at least partially counter-shaped with respect to the edge portion 2c of the main body 2. In other words, the engagement tabs 3b are conformed so as to be able to easily hook onto the edge portion 2c when the lid 3 closes the containment volume.

The central portion 3a can be pressed by a user so as to obtain a movement of the engagement tabs 3b away from the edge portion 2c, defining a configuration for disengaging the lid 3 from the main body 2.

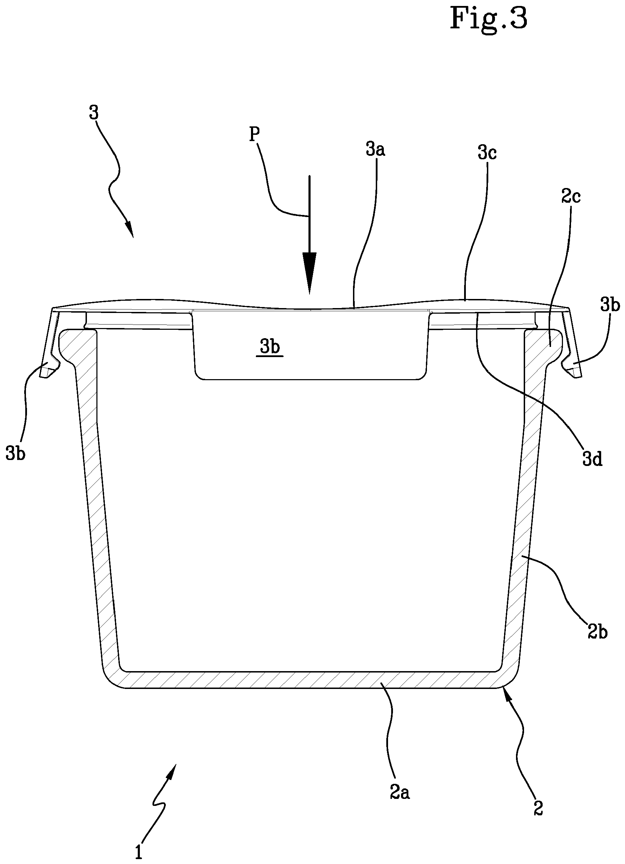

In other words, the disengagement configuration, shown in figure 3, defines a configuration of the lid 3 through which it is possible to easily remove the latter from the main body 2.

Advantageously, by exercising pressure "P" on the central portion 3a elastic deformation is obtained, which moves the perimeter portion 3c and, therefore, moves the engagement tabs 3b away from the edge portion 2c so as to be able to easily separate the lid 3 from the main body 2. By releasing the central portion 3a the elastic return of the perimeter portion 3c in the initial configuration is obtained, and the consequent nearing and engagement of the engagement tabs 3b to the edge portion 2c. Preferably, the central portion 3a is movable between a raised position (figure 2), in which the engagement tabs 3b are hooked or can be hooked to the edge portion 2c of the main body 2 for obtaining the engagement configuration of the lid 3, and a lowered position (figure 3) in which the engagement tabs 3b are moved away from the edge portion 2c of the main body 2 for obtaining the disengagement configuration of the lid 3.

In other words, by exercising pressure "P" on the central portion 3a the lowering of the latter is obtained which, consequently, moves the perimeter portion 3c enabling the engagement tabs 3b to move away from the edge portion 2c enabling the lid 3 to easily move away from the main body 2. By releasing the central portion 3a, i.e. stopping the pressure "P", the central portion 3a is elastically raised and consequently moves the perimeter portion 3c enabling the nearing and engagement of the engagement tabs 3b to the edge portion 2c, resulting in the re-hooking of the lid 3 to the main body 2.

The central portion 3a preferably has a substantially dome-shaped conformation. The term substantially dome-shaped conformation is intended to mean a conformation in which the central portion 3a (and therefore the perimeter portion 3c) has a curved shape in which a raised portion intended for the application of pressure "P" can be identified.

The central portion 3a is conformed so as to prevent undesired pressure of the central portion 3a itself leading to a disengagement configuration and therefore undesired opening of the container 1.

In other words, the elastic properties of the container 3 are such as to bring the container 3 itself back into a configuration in which it can be hooked to the main body 2 but at the same time guarantee resistance such as to prevent undesired openings.

Preferably, the perimeter portion 3c of the central portion 3a is configured to perform a roto-translation movement when the central portion 3a is pressed by the user. In this way, the perimeter portion 3c (i.e. the central portion 3a) is able to move the engagement tabs 3b away from the edge portion 2c.

A roto-translation movement means a movement of the perimeter portion 3c in which the latter moves away from the upper portion of the perimeter side wall 2b of the main body 2 and undergoes a slight elastic deformation which leads to a rotation of the structure which enables the engagement tabs 3b to be rotated.

In other words, the engagement tabs 3b are movable in rotation with respect to the perimeter portion 3c during the pressure "P" of the central portion 3a to pass from the engagement configuration to the disengagement configuration of the lid 3.

Preferably, as shown in the appended figures, the lid 3 further comprises a gasket 3d configured to adhere to the upper portion of the perimeter side wall 2b in the engagement configuration.

In other words, in the engagement configuration, the lid 3 enables good adherence to the main body 2, as well as sealing the containment volume for storing foodstuffs to be obtained.

A user intending to use the container 1 subject-matter of the present invention will be able to close and open the container itself with extreme simplicity.

In particular, after filling the main body 2 with the foodstuffs or other products to be stored (and/or transported), a user must simply apply the lid 3 to the upper portion of the perimeter side wall 2b obtaining a slight elastic deformation of the engagement tabs 3b which enables the hooking thereof to the edge portion 2c. During such process, the gasket 3d will enable adherence of the lid 3 to the main body 2 to be obtained, suitable for storing foodstuffs, and useful for preventing any leaks of smells or possibly of liquids.

Should the user decide to open the container 1 he/she must simply apply pressure "P" to the central portion 3a of the lid 3 obtaining an elastic deformation sufficient to enable the engagement tabs 3b to move away and therefore easy opening of the container 1.

Advantageously, the present invention is able to overcome the drawbacks which have emerged from the prior art.

Advantageously, the lid 3 enables hermetic closure of the main body 2 to be obtained and easy opening thereof to be enabled, preventing at the same time any undesired opening.

Furthermore, the lid 3 can be used several times without presenting any permanent plastic deformations which would in fact cancel out the efficacy thereof in performing the closure of the containment volume and therefore the safe storage and/or transport of the foodstuffs (or other products) contained therein.

## Claims

1. A container (1) for foodstuffs, comprising:
- a main body (2) having a bottom wall (2a) and a perimeter side wall (2c) connected to said bottom wall (2a) so as to define a containment volume for foodstuffs, said perimeter side wall (2b) being provided with an edge portion (2c) distal from said bottom wall (2a);
- a lid (3) comprising a central portion (3a) and engagement tabs (3b) extending from a perimeter portion (3c) of said central portion (3a) and configured to hook or to be hooked to said edge portion (2c) of the main body (2) so as to define a configuration for engaging the lid (3) with said main body (2);
**characterised in that**:
the lid (3) is made of an elastic material;
the lid (3) is elastically deformable between a configuration of hooking to the main body (2) and a configuration of disengagement from the main body (2);
the central portion (3a) can be pressed by a user so as to obtain a movement of said engagement tabs (3b) away from said edge portion (2c),
defining said configuration for disengaging the lid (3) from the main body (2);
the central portion (3a) can be released by the user so as to obtain a movement of said engagement tabs (3b) towards said edge portion (2c), defining said configuration for hooking the lid (3) to the main body (2).

2. The container (1) according to claim 1, wherein said central portion (3a) is movable between a raised position, in which said engagement tabs (3b) are hooked or can be hooked to said edge portion (2c) of the main body (2) for obtaining said engagement configuration, and a lowered position in which said engagement tabs (3b) are moved away from said edge portion (2c) of the main body for obtaining said disengagement configuration.

3. The container (1) according to claim 1 or 2, wherein said perimeter portion (3c) of the central portion (3a) is configured to perform a roto-translation movement when said central portion (3a) is pressed by the user so as to move said engagement tabs (3b) away.

4. The container (1) according to one or more of the preceding claims, wherein said engagement tabs (3b) are movable in rotation with respect to said perimeter portion (3c) of the central portion (3a) during a pressure (P) of the central portion (3a) for passing from the engagement configuration to the disengagement configuration.

5. The container (1) according to one or more of the preceding claims, wherein said engagement tabs (3b) have an inner portion, turned towards said main body (2) in said engagement configuration, at least partially counter-shaped with respect to said edge portion (2c) of the main body (2).

6. The container (1) according to one or more of the preceding claims, wherein said central portion (3a) has a substantially dome-shaped conformation.

7. The container (1) according to one or more of the preceding claims, wherein said lid (3) further comprises a gasket (3d) configured to adhere to an upper portion of said perimeter side wall (2b).

8. The container (1) according to one or more of the preceding claims, wherein said lid is made of elastic material.

9. The container (1) according to one or more of the preceding claims, wherein said lid (3) comprises at least four engagement tabs (3b).

10. The container (1) according to one or more of the preceding claims, wherein said main body (2) comprises a bottom wall (2a) with a substantially square conformation and wherein said lid (3) has the same conformation as the bottom wall (2a) or as an upper portion of the perimeter side wall (2b).
